# EUROPEAN PATENT APPLICATION

(11) **EP 4 246 396 A1**
(43) Date of publication of application: **20.09.2023**
(21) Application number: 22192961.5
(22) Date of filing: 30.08.2022
(51) Int. Cl.: G06Q 10/06, G06Q 10/10

(54) **INFORMATION PROCESSING APPARATUS, INFORMATION PROCESSING SYSTEM, PROGRAM, AND INFORMATION PROCESSING METHOD**

(30) Priority: 15.03.2022 JP 2022040666
(71) Applicant: FUJIFILM Business Innovation Corp., Minato-ku Tokyo (JP)
(72) Inventor: KOBAYASHI, Kazuhide, Yokohama-shi (JP)
(74) Representative: Haseltine Lake Kempner LLP

(57) **Abstract**

An information processing apparatus includes a processor configured to: obtain the role of a file associated with a task, the task being managed on a task management screen for managing the task; and display the file on a file management screen for managing the file, the display being performed in a predetermined display format corresponding to the obtained role of the file.

## Description

### Background

### (i) Technical Field

The present disclosure relates to an information processing apparatus, an information processing system, a program, and an information processing method.

### (ii) Related Art

In Japanese Unexamined Patent Application Publication No. 2003-141320, a project management system, which includes a document management database and a project-information management database, has been proposed. The document management database is used to manage reference documents, which are referred to in execution of projects, and created output documents. The project-information management database is used to manage the progress of the projects. In planning a project, empty entities of output documents, which are to be created in the processes of the project, are registered in the document management database. In the project-information management database, link information to the registered empty entities and reference documents is registered in association with the processes.

In Japanese Unexamined Patent Application Publication No. 2003-108735, a project management system, which includes a document management database for managing work products created in execution of projects, and a project-information management database for managing the progress of the projects, has been proposed. In planning a project, empty entities of work products, which are to be created in the processes in the project, are registered in the document management database. Link information to the registered empty entities is registered in the project-information management database in association with the processes.

In Japanese Unexamined Patent Application Publication No. 2006-139358, a task supporting system has been proposed. In the task supporting system, a template generating unit generates a template defining, on the basis of the execution order, a group of task processes included in a task. The template, which is generated by the template generating unit, is displayed by using a template execution unit so that users' execution of the task is supported. The task supporting system includes a task process associating unit for associating the task processes, which are defined in the template, with each other. In acquisition and use of the work products of a preceding task, which is a task process to be completed before start of a certain task process, in execution of a succeeding task, which is a task process starting after completion of the preceding task, acquisition of the work products of the preceding task may be supported on the basis of the association, which is made by the task process associating unit, between the task processes.

Task management using a task management screen for managing tasks and file management using a file management screen for managing files may be operated in coordination with each other. On the screen for managing files, users fail to grasp the roles of the files, such as whether a file associated with a task serves as a file which is referred to in the task, or a file which is output from the task.

### Summary

Accordingly, it is an object of the present disclosure to provide an information processing apparatus, an information processing system, a program, and an information processing method which enable the roles of files, which are associated with tasks, to be grasped on a screen for managing files.

According to a first aspect of the present disclosure, there is provided an information processing apparatus including a processor configured to: obtain a role of a file associated with a task, the task being managed on a task management screen for managing the task; and display the file on a file management screen for managing the file, the display being performed in a predetermined display format corresponding to the obtained role of the file.

According to a second aspect of the present disclosure, in the information processing apparatus according to the first aspect, the processer is configured to perform the display in a display format which indicates that the role is at least one of a reference file or an output file. The reference file is referred to in the task. The output file is output from the task.

According to a third aspect of the present disclosure, in the information processing apparatus according to the second aspect, the processer is configured to display the file in the display format in which an additional image is added to the file. The additional image represents the at least one of a reference file or an output file.

According to a fourth aspect of the present disclosure, in the information processing apparatus according to the third aspect, the processor is configured to, when the at least one of a reference file or an output file is related to multiple tasks, display additional images. The additional images are equal to the tasks in number.

According to a fifth aspect of the present disclosure, in the information processing apparatus according to the third or fourth aspect, the processor is configured to display the additional image in a display format different in each progress of the task.

According to a sixth aspect of the present disclosure, in the information processing apparatus according to any one of the first to fifth aspects, the processor is configured to display, on the file management screen, a file to be added for the task, in a display format indicating that the file is to be added.

According to a seventh aspect of the present disclosure, in the information processing apparatus according to any one of the first to sixth aspects, the processor is configured to, when there is at least one file which is automatically collected in display of the task management screen, display the at least one file on the file management screen in a display format different from a display format of another file.

According to an eighth aspect of the present disclosure, in the information processing apparatus according to the seventh aspect, the processor is configured to display a file among the at least one automatically-collected file on the file management screen in the display format identical to the display format of the other file. The displayed file among the at least one automatically-collected file is a file which is viewed on the task management screen.

According to a ninth aspect of the present disclosure, in the information processing apparatus according to the seventh aspect, the processor is configured to display a file among the at least one automatically-collected file on the file management screen. The displayed file among the at least one automatically-collected file is a file which is viewed on the task management screen.

According to a tenth aspect of the present disclosure, in the information processing apparatus according to any one of the first to ninth aspects, the processor is configured to, when there is a file associated with multiple tasks, display the file on the file management screen in accordance with an order corresponding to an execution order of the tasks.

According to an eleventh aspect of the present disclosure, there is provided an information processing system including the information processing apparatus according to any one of the first to tenth aspects, and an information processing terminal that communicates with the information processing apparatus to display the file management screen through the displaying of the file.

According to a twelfth aspect of the present disclosure, there is provided a program causing a computer to execute a process for information processing. The process includes obtaining a role of a file associated with a task. The task is managed on a task management screen for managing the task. The process includes displaying the file on a file management screen for managing the file. The display is performed in a predetermined display format corresponding to the obtained role of the file.

According to a thirteenth aspect of the present disclosure, there is provided an information processing method including: obtaining a role of a file associated with a task, the task being managed on a task management screen for managing the task; and displaying the file on a file management screen for managing the file, the display being performed in a predetermined display format corresponding to the obtained role of the file.

According to the first aspect, there may be provided an information processing apparatus which enables the role of a file, which is associated with a task, to be grasped on the screen for managing the file.

According to the second aspect, the role of the file associated with the task may be grasped as being either one or both of a reference file, which is referred to in the task, and an output file, which is output from the task.

According to the third aspect, the role of the file associated with the task may be grasped through the additional image.

According to the fourth aspect, the state in which the file is associated with multiple tasks may be grasped.

According to the fifth aspect, the progress of the task may be grasped through the display format of the additional image.

According to the sixth aspect, the state, in which the file is scheduled to be added to the task, may be grasped.

According to the seventh aspect, the at least one file, which is automatically collected on the task management screen, may be distinguished from the other file on the file management screen.

According to the eighth aspect, a file, which is automatically collected and has not been viewed, may be grasped on the file management screen.

According to the ninth aspect, compared with the case in which all the automatically-collected files are displayed on the file management screen, noise for necessary work may be suppressed.

According to the tenth aspect, when there is a file associated with multiple tasks, the execution order of the tasks may be grasped on the file management screen.

According to the eleventh aspect, there may be provided an information processing system which enables the role of a file, which is associated with a task, to be grasped on the screen for managing the file.

According to the twelfth aspect, there may be provided a program which enables the role of a file, which is associated with a task, to be grasped on the screen for managing the file.

According to the thirteenth aspect, there may be provided an information processing method which enables the role of a file, which is associated with a task, to be grasped on the screen for managing the file.

### Brief Description of the Drawings

Exemplary embodiment of the present disclosure will be described in detail based on the following figures, wherein:
Fig. 1 is a diagram illustrating the schematic configuration of an information processing system according to the present exemplary embodiment;
Fig. 2 is a block diagram illustrating the electrical system configuration of an information processing terminal, a file management server, and a task management server in an information processing system according to the present exemplary embodiment;
Fig. 3 is a block diagram illustrating the functional configuration of a file management server and a task management server in an information processing system according to the present exemplary embodiment;
Fig. 4 is a diagram illustrating an exemplary file management screen of a file management system, which is provided by a file management server;
Fig. 5 is a diagram illustrating an exemplary task management screen of a task management system, which is provided by a task management server;
Fig. 6 is a diagram illustrating an example in which, when a file with a thick border is selected on a file management screen, a task management screen displaying task information corresponding to the file is displayed as pop-up information, and the file as a work product of the task is displayed with a thick border on a task management screen;
Fig. 7 is a diagram illustrating an example in which task icons, each of which indicates a task related to its corresponding file, and arrow icons, each of which indicates whether its corresponding file is an input file or an output file by using an arrow image, are displayed as icons on a file management screen;
Fig. 8 is a diagram illustrating another exemplary file management screen;
Fig. 9 is a diagram illustrating an exemplary task selection screen indicating that task A, task B, and task C are associated with each other;
Fig. 10 is a diagram illustrating a display example made so that users know that a file is scheduled to be added to a file management system;
Fig. 11 is a diagram for describing an example in which the display format of reference information, which has been collected automatically, in a workspace of a file management screen is changed;
Fig. 12 is a diagram illustrating an example in which a file, which has been referred to actually on a task management screen, is displayed on a file management screen;
Fig. 13 is a diagram illustrating an example in which, when two or more tasks are related to each other and one of the tasks has been completed, the icon of the task is displayed in gray while the icons of the other tasks are displayed in a different color;
Fig. 14 is a diagram illustrating an example in which task icons and arrow icons are displayed so that users know that an output file of task A is used as an input file of task B;
Fig. 15 is a diagram illustrating an example in which task A, task B, and task C are done in this sequence and the result of each task is used by its next task; and
Fig. 16 is a flowchart of an exemplary process performed by a file management server in an information processing system according to the present exemplary embodiment.

### Detailed Description

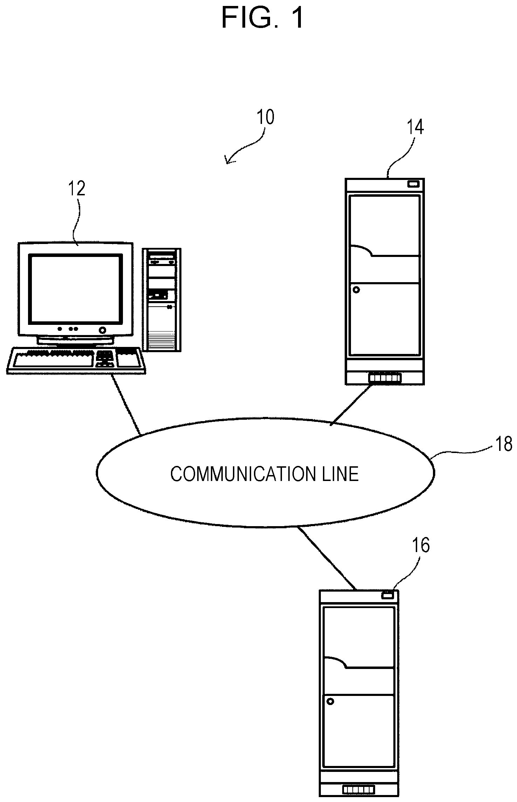

Referring to the drawings, an exemplary embodiment will be described in detail below. In the present exemplary embodiment, an information processing system, in which an information processing terminal and multiple servers are connected to each other through a communication line such as various networks, will be described as an example. Fig. 1 is a diagram illustrating the schematic configuration of an information processing system 10 according to the present exemplary embodiment.

As illustrated in Fig. 1, the information processing system 10 according to the present exemplary embodiment includes an information processing terminal 12, a file management server 14 which serves as an information processing apparatus, and a task management server 16. In the present exemplary embodiment, an example including a single information processing terminal 12, a single file management server 14, and a single task management server 16 will be described. However, multiple information processing terminals 12, multiple file management servers 14, and multiple task management servers 16 may be included.

The information processing terminal 12, the file management server 14, and the task management server 16 are connected to each other through a communication line 18, such as a local area network (LAN), a wide area network (WAN), the Internet, and an intranet. Each of the information processing terminal 12, the file management server 14, and the task management server 16 performs communication through the communication line 18 to enable various types of data to be received/transmitted from/to the other apparatuses.

In the information processing system 10 according to the present exemplary embodiment, a file management system, which manages files, is constructed in the file management server 14, and the file management server 14 provides a file management service. In contrast, a task management system, which manages tasks, is constructed in the task management server 16, and the task management server 16 provides a task management service. In the present exemplary embodiment, a form in which file management and task management are performed in the respective servers will be described. Alternatively, a form in which a single server performs file management and task management may be employed. In the present exemplary embodiment, a task is, for example, the unit of an environment in which users manage information about their work. For example, a task is one of the pieces of work (for example, operations of creating various documents, such as an estimate sheet, a purchase order, and a bill) in a project (a specific assignment, for example, planning, a research program, or a development). Members (persons who do the task), files, and the like are registered in a task. A task indicates an environment, for example, in which the members exchange information with each other in the task, and submit work products.

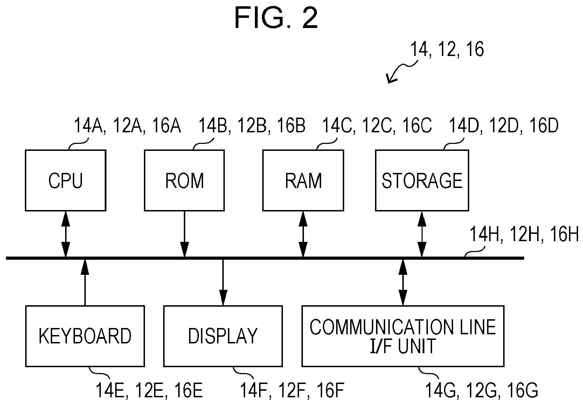

The electrical system configuration of the information processing terminal 12, the file management server 14, and the task management server 16 according to the present exemplary embodiment will be described. Fig. 2 is a block diagram illustrating the electrical system configuration of the information processing terminal 12, the file management server 14, and the task management server 16 in the information processing system 10 according to the present exemplary embodiment. The information processing terminal 12, the file management server 14, and the task management server 16 have a typical computer configuration. The configuration will be described by using the file management server 14 as a typified apparatus.

As illustrated in Fig. 2, the file management server 14 according to the present exemplary embodiment includes a central processing unit (CPU) 14A, a read only memory (ROM) 14B, a random access memory (RAM) 14C, a storage 14D, a keyboard 14E, a display 14F, and a communication line I/F (interface) unit 14G. The CPU 14A controls the operations of the entire file management server 14. The ROM 14B stores, for example, various control programs and various parameters in advance. The RAM 14C is used, for example, as a work area in the CPU 14A's execution of various programs. The storage 14D stores, for example, various types of data and application programs. The keyboard 14E is used for input of various types of information. The display 14F is used for display of various types of information. The communication line I/F unit 14G is connected to the communication line 18, and receives/transmits various types of data from/to other apparatuses connected to the communication line 18. The units of the file management server 14 are connected to each other electrically through a system bus 14H. In the file management server 14 according to the present exemplary embodiment, the storage 14D is used as a storage unit. However, the configuration is not limited to this. For example, another nonvolatile memory or the like, such as a hard disk drive (HDD) or a flash memory, may be used as a storage unit.

The file management server 14 according to the present exemplary embodiment, which has the configuration described above, uses the CPU 14A to access the ROM 14B, the RAM 14C, and the storage 14D, obtain various types of data through the keyboard 14E, and display various types of information on the display 14F. The file management server 14 uses the CPU 14A to control reception/transmission of communication data through the communication line I/F unit 14G.

In the information processing system 10 according to the present exemplary embodiment, which has such a configuration, the file management server 14 provides a file management service, and the task management server 16 provides a task management service as described above.

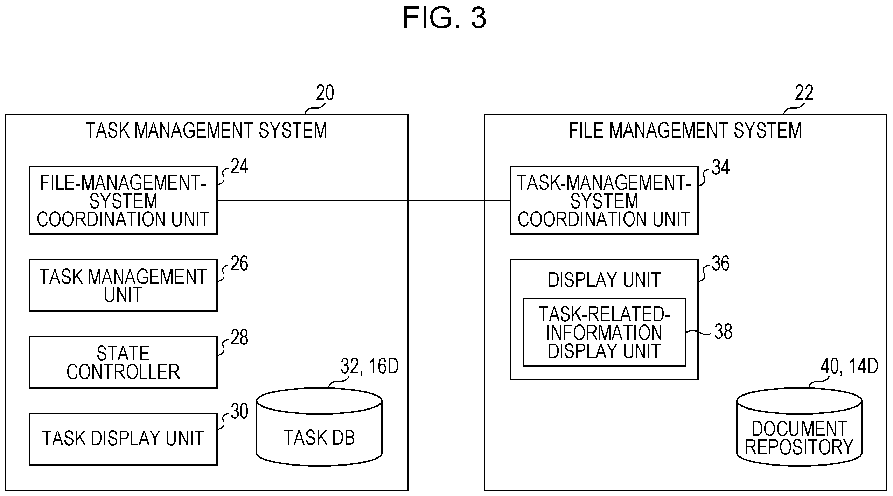

Fig. 3 is a block diagram illustrating the functional configuration of the file management server 14 and the task management server 16 in the information processing system 10 according to the present exemplary embodiment.

In the task management server 16, a task management system 20, which has functions of a file-management-system coordination unit 24, a task management unit 26, a state controller 28, a task display unit 30, and a task DB 32 (16D), is constructed.

The file-management-system coordination unit 24 coordinates with a file management system 22, and coordinates tasks, which are managed by the task management system 20, with files, which are managed by the file management system 22. Specifically, in response to a request from the file management system 22, the file-management-system coordination unit 24 transmits information managed by the task management system 20. In addition, the file-management-system coordination unit 24 receives information, which is managed by the file management system 22 and which is requested by the task management system 20.

For each of multiple tasks, the task management unit 26 stores, in the storage 16D, task information related to the task. The task management unit 26 generates a task DB (database) in the storage 16D, and manages tasks.

The state controller 28 generates a task management screen on which information relating to a task is displayed. The state controller 28 exerts control, such as display in a display format in accordance with the state of the information, which relates to the task and which is displayed on the task management screen.

For example, the task display unit 30 displays a task management screen, which is generated by the state controller 28, on the display 12F of the information processing terminal 12.

In the file management server 14, the file management system 22, which has functions of a task-management-system coordination unit 34, a display unit 36, and a document repository 40 (14D), is constructed.

The task-management-system coordination unit 34 coordinates with the task management system 20, and coordinates tasks, which are managed by the task management system 20, with files, which are managed by the file management system 22. Specifically, in response to a request from the task management system 20, the task-management-system coordination unit 34 transmits information managed by the file management system 22. In addition, the task-management-system coordination unit 34 receives information, which is managed by the task management system 20 and which is requested by the file management system 22.

The display unit 36 generates, for display, a file management screen on the basis of files stored in the document repository 40 (14D) in the storage 14D. The display unit 36 includes a task-related-information display unit 38. The task-related-information display unit 38 obtains relations between tasks and files through the task-management-system coordination unit 34, and displays the relations on the file management screen. According to the present exemplary embodiment, the roles of files associated with tasks are obtained. The files are displayed on the file management screen in predetermined display formats corresponding to the roles of the files.

Exemplary screens displayed in the information processing system 10 according to the present exemplary embodiment will be described.

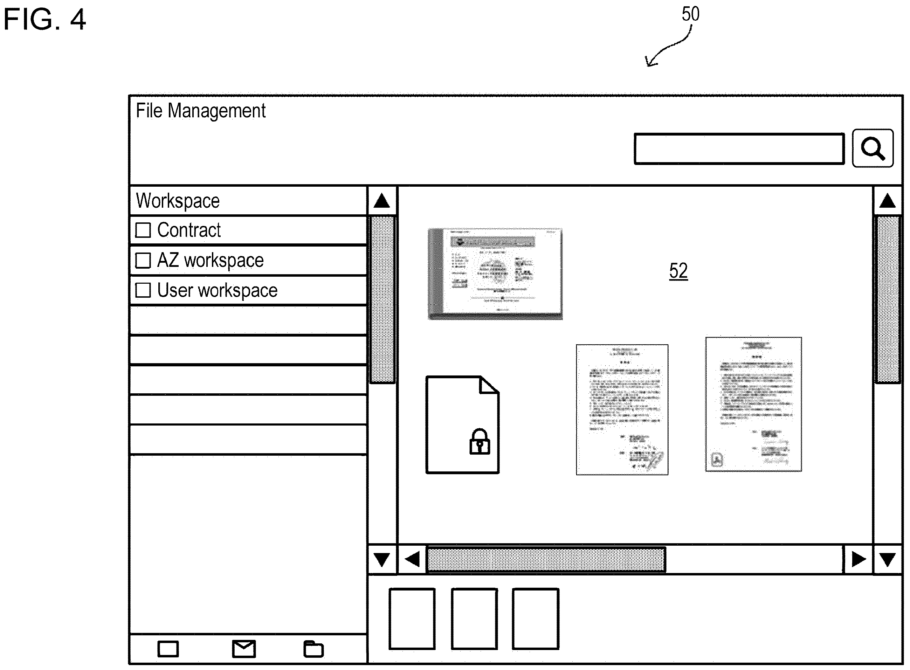

Fig. 4 is a diagram illustrating an exemplary file management screen of the file management system 22, which is provided by the file management server 14.

On a file management screen 50, files stored in the document repository 40 (14D) are displayed in a workspace (WS) 52. Workspaces 52 are registered in advance in the document repository 40 (14D). For each workspace, related files are registered in advance. Files may be viewed in a workspace 52 on the file management screen 50.

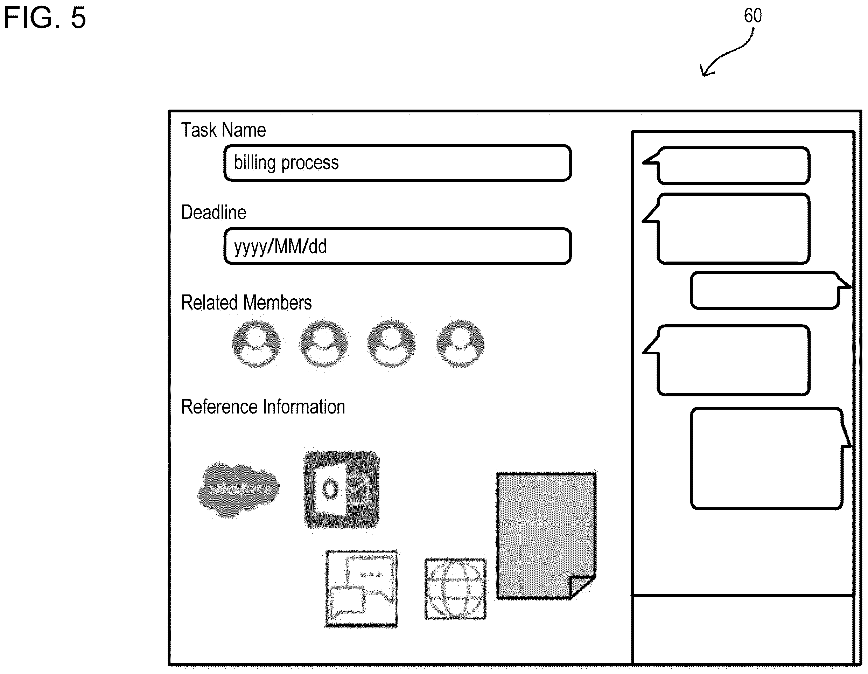

Fig. 5 is a diagram illustrating an exemplary task management screen of the task management system 20, which is provided by the task management server 16.

On a task management screen 60, the details of a task stored in the task DB 32 (16D) are displayed. For example, information, such as the task name, the deadline, the related members, reference information, work products (Output), and a chat, is displayed.

On the file management screen 50, only files are displayed. Thus, users do not know the role of a file associated with a task managed on its task management screen. The role of a file indicates, for example, whether the file serves as a reference file (input file), which is referred to in the task, or an output file, which is a work product that is output from the task.

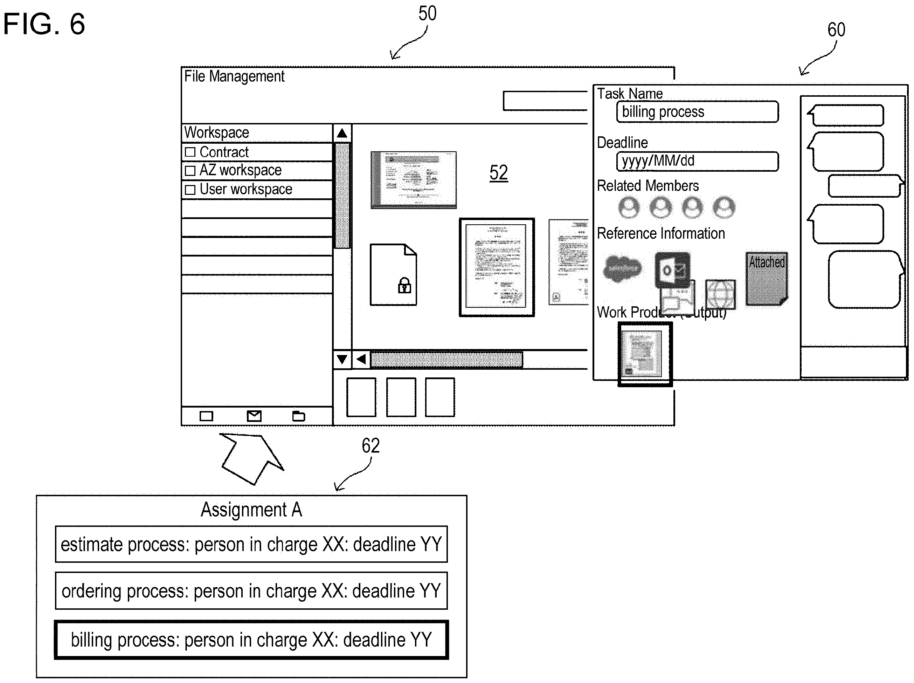

Accordingly, in the present exemplary embodiment, the file-management-system coordination unit 24 coordinates with the task-management-system coordination unit 34. Thus, the file management server 14 obtains, from the task management system 20, the role of a file associated with a task managed on its task management screen 60. The display unit 36 displays, on the file management screen 50, the file in a predetermined display format corresponding to the obtained role of the file. For example, as illustrated in Fig. 6, when a file displayed on the file management screen 50 is selected, the task management screen 60 for task information related to the file is displayed in the same screen or as a pop-up screen. The corresponding file on the task management screen 60 is displayed in a predetermined display format, which corresponds to the role of the selected file and which is, for example, highlight display such as display with a frame. Fig. 6 illustrates an example in which, when a file with a thick border is selected on the file management screen 50, the task management screen 60, on which task information corresponding to the file is displayed, pops up, and the file as a work product of the task is displayed with a thick border on the task management screen 60. The popping up is a mechanism for starting a different screen on a screen.

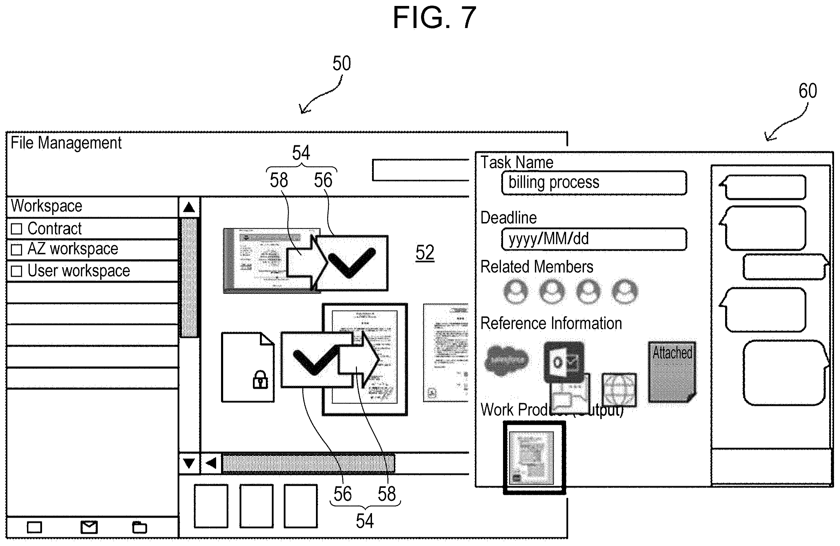

Alternatively, as illustrated in Fig. 7, an icon 54, which indicates whether a file serves as a reference file, which is referred to in a task, or an output file, which is output from the task, is displayed as an exemplary additional image on the file management screen 50. Thus, a file is displayed on the file management screen 50 in a predetermined display format corresponding to the role of the file associated with the task. Fig. 7 illustrates an example in which a task icon 56, which indicates a task related to a file, and an arrow icon 58, which indicates, by using an arrow image, whether the file is for input or for output, are used as an icon 54 and are displayed on the file management screen 50. In the present exemplary embodiment, the case in which a task icon 56 is displayed subsequent to an arrow icon 58 indicates an input file; the case in which an arrow icon 58 is displayed subsequent to a task icon 56 indicates an output file. The additional image is not limited to the icon 54. For example, a mark or symbol may be used.

When a file is stored on the task management screen 60, the file may be, for example, replicated in, moved to, or associated with the file management system 22 related to the task.

In Fig. 6, it is assumed that the file management screen 50 is used while files related to an assignment are listed. However, a function of displaying only files related to a task may be included.

As illustrated in Fig. 6, when a task is selected from a task list screen 62 which displays a list of tasks, its task management screen 60 and the related file management screen 50 may be displayed at the same time.

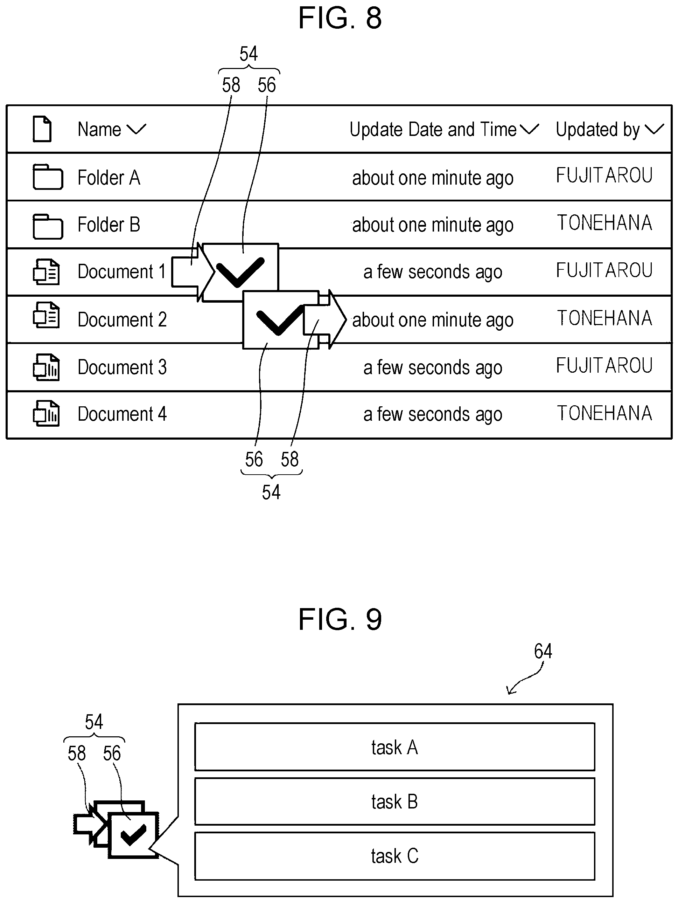

As illustrated in Fig. 8, the file management screen 50 may display task icons 56 and arrow icons 58 in a display form in which files are listed. Fig. 8 is a diagram illustrating another example of the file management screen 50. Fig. 8 illustrates an example in which, for each file, its icon, which indicates the type of the file, its file name, its update date and time, and its update user are displayed.

When a file is related to multiple tasks, as illustrated in Fig. 9, multiple overlapping task icons 56, whose number is equal to the number of tasks, may be displayed so as to indicate association of multiple tasks with the file. An operation such as a mouseover on the task icons 56 may cause a list of the associated tasks to be displayed, and a related task may be selected. Fig. 9 illustrates an exemplary task selection screen 64 which indicates that task A, task B, and task C are associated with the file. Selection of a task on the task selection screen 64 causes the corresponding task management screen 60 to be displayed. A mouseover indicates an operation of causing a mouse pointer to hover on a task icon 56 or the like which is a target.

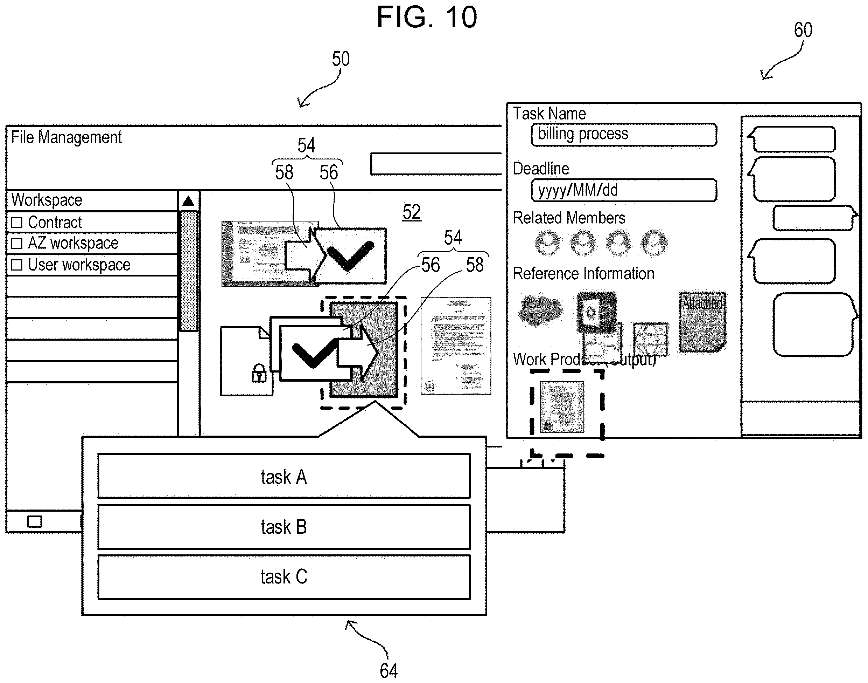

When an output file is predefined, display may be made on the file management system 22 in a display format indicating that a file is scheduled to be added, so that users know the scheduling of addition of the file. Specifically, as illustrated by using dotted lines in Fig. 10, an area, in which a file associated with the task is input, is allocated on the file management screen 50, and the task management screen 60 for the task may be displayed by a user who performs an operation. At that time, the image of a document which serves as a base, such as a file template or a file format, may be displayed instead. Alternatively, for example, translucent display may be used so that users know that the image is a substitute.

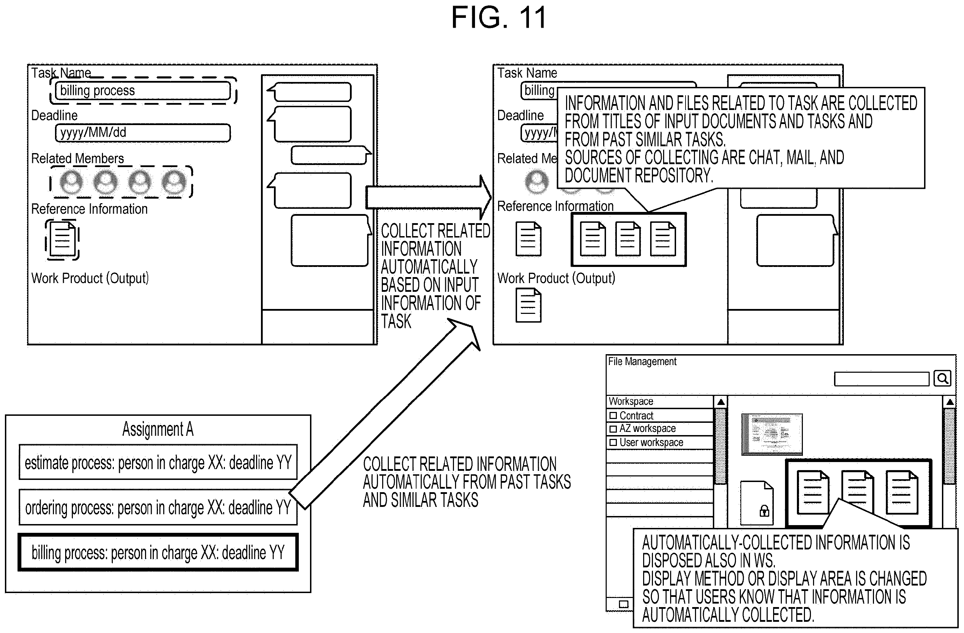

The task management system 20 according to the present exemplary embodiment has a function of automatically collecting reference information from past tasks and similar tasks. In this case, the automatically-collected reference information may be displayed in a different display format in the workspace 52 on the file management screen 50. For example, as illustrated in Fig. 11, related information is automatically collected on the basis of input information of a task. The information is collected, for example, from a chat, mail, and the document repository 40. In addition, related information is automatically collected from past tasks and similar tasks, and the automatically-collected files are displayed on the task management screen 60, for example, with a frame surrounding the files. In addition, the automatically-collected information is disposed also in the workspace 52 on the file management screen 50. The information is displayed in a display format different from that for the other files, such as by changing the display method or the display area, so that users know that the files are automatically collected. For example, the information is displayed in one of the following manners: in a dedicated display area; through highlight display; in a manner in which overlapping icons are displayed; by using a folder which is automatically generated and in which the files are stored. In this case, files, which have been viewed, among the automatically-collected files may be displayed in the same display format as that for the other files.

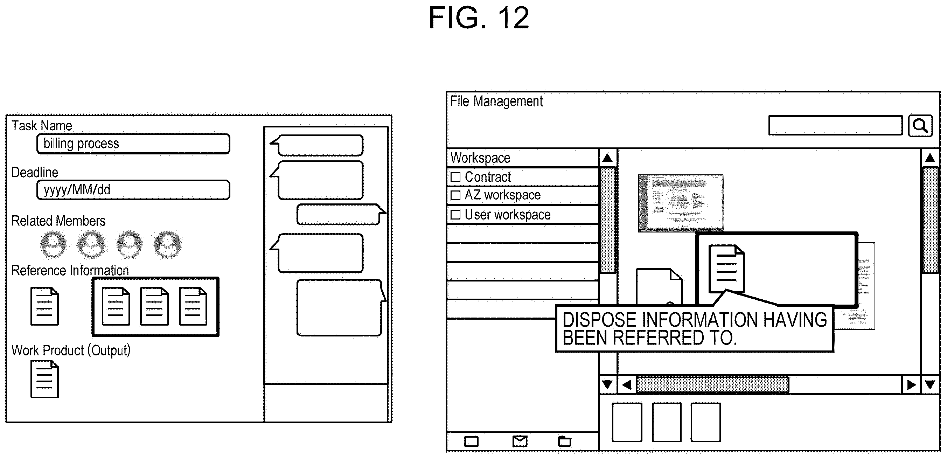

The automatically-collected information may have low information accuracy. If all the automatically-collected information is disposed on the file management screen 50, the displayed automatically-collected information may serve as noise for necessary work. Accordingly, only files, which have been actually referred to by users from the task, may be displayed on the file management screen 50 by associating the files with the file management system 22. For example, as illustrated in Fig. 12, only a file, which has been actually referred to on the task management screen 60, is displayed on the file management screen 50.

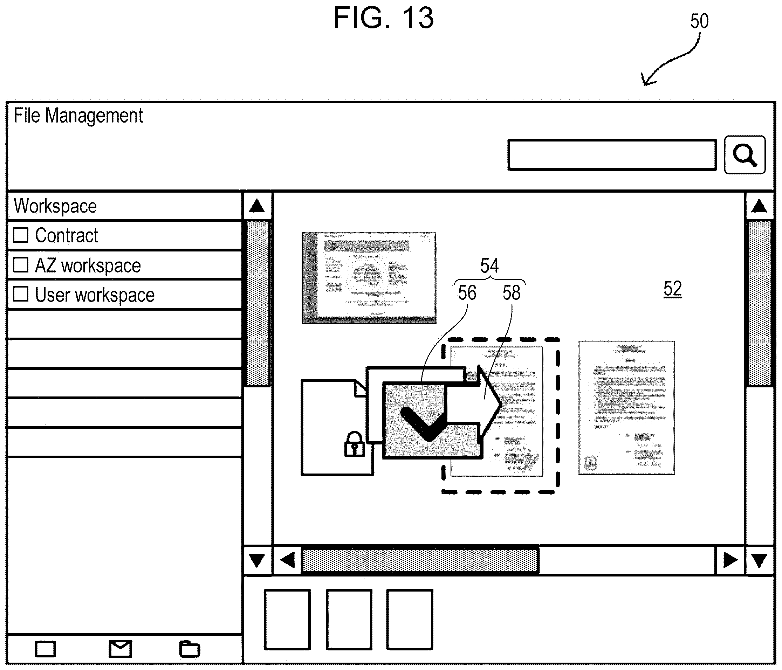

In addition, in accordance with the task or the state of a file, the display format of the file displayed on the file management screen 50 or the display format of the file displayed on the task management screen may be changed. For example, when reference information of a task is used as a work product, the display format is changed, on the file management screen 50, to that indicating an output file. A file is displayed in a different display format in each progress of the task. In addition, a document in a task in progress is likely to be being created. Thus, a document is displayed in a display format in which users may determine, for example, whether the related task is currently in progress, or is completed, from the file management screen 50. Specifically, as illustrated in Fig. 13, two or more tasks are related to each other. When one of the tasks is completed, the icon of the task is displayed in gray which is a color different from that of the other tasks. Alternatively, information indicating the state may be added to overlapping task icons 56. Alternatively, either one of the display method for files in progress and that for completed files may be changed. Examples of the display method include display in a dedicated display area, highlight display, display of overlapping icons, and use of a folder which is automatically generated and in which files are stored.

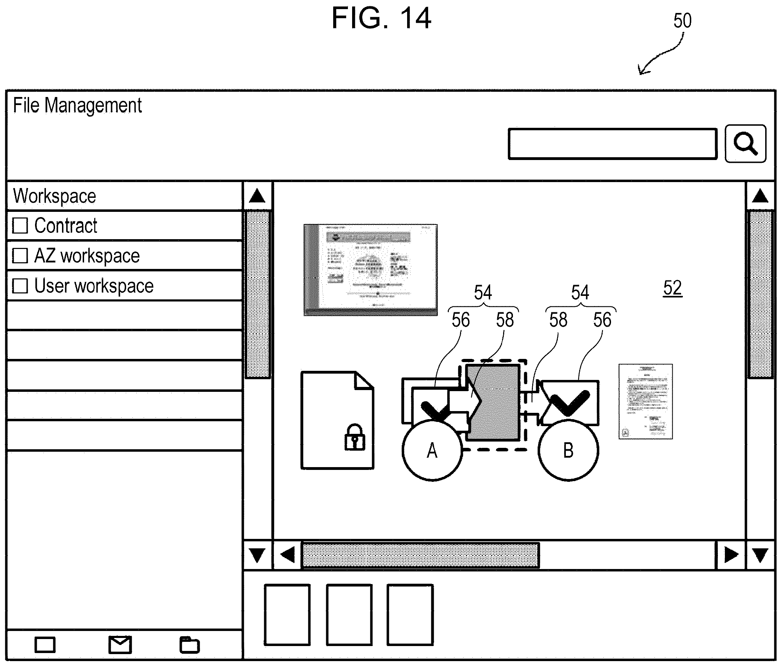

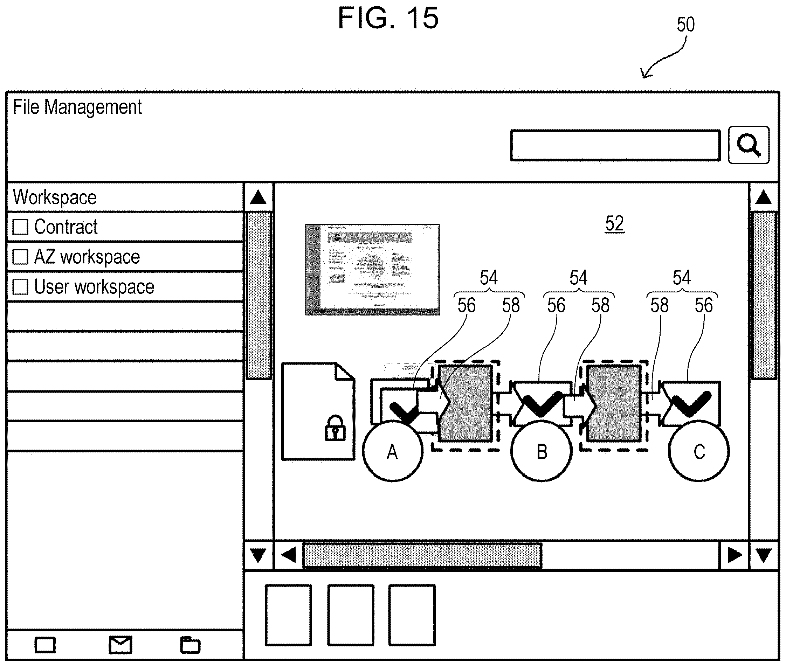

On the file management screen 50 according to the present exemplary embodiment, when an output file from a certain task is used as an input file of a different task, the file is displayed so that users know the execution order of tasks. For example, as illustrated in Fig. 14, task icons 56 and arrow icons 58 are displayed so that users know that an output file from task A is used as an input file of task B. When multiple tasks are related to each other, as illustrated in Fig. 15, files are sorted and displayed in the execution order of the tasks. Fig. 15 illustrates an example in which task A, task B, and task C are done in this sequence, and in which the result from each task is used by its next task.

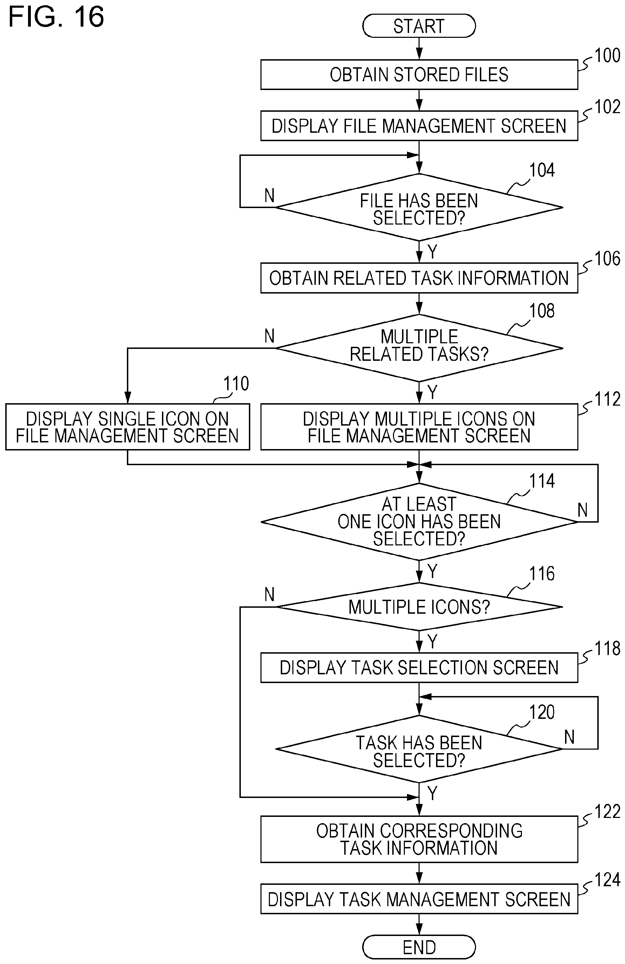

A specific process performed in the information processing system 10 according to the present exemplary embodiment, which has the configuration described above, will be described. Fig. 16 is a flowchart of an exemplary process performed by the file management server 14 in the information processing system 10 according to the present exemplary embodiment. The process in Fig. 16 starts, for example, when the information processing terminal 12 transmits an instruction to display a file management screen 50.

In step 100, the CPU 14A obtains files stored in the document repository 40 (14D), and proceeds to step 102.

In step 102, the CPU 14A displays a file management screen 50, and proceeds to step 104. For example, the CPU 14A, which functions as the display unit 36, transmits the file management screen 50 to the information processing terminal 12. Thus, the file management screen 50 is displayed on the display 12F of the information processing terminal 12.

In step 104, the CPU 14A determines whether a file has been selected. For example, the CPU 14A determines whether the selection result, which is obtained through an operation, for selection of a file, using the keyboard 12E and the like of the information processing terminal 12, has been received from the information processing terminal 12. The CPU 14A waits until the determination result is positive, and proceeds to step 106.

In step 106, the CPU 14A obtains, from the task management server 16, task information related to the selected file, and proceeds to step 108. That is, the CPU 14A, which functions as the task-management-system coordination unit 34, obtains, from the task management system 20, task information related to the selected file.

In step 108, the CPU 14A determines whether there are multiple related tasks. If the determination result is negative, the CPU 14A proceeds to step 110. If the determination result is positive, the CPU 14A proceeds to step 112.

In step 110, the CPU 14A displays a single icon 54 on the file management screen 50, and proceeds to step 114. That is, the CPU 14A, which functions as the display unit 36 and the task-related-information display unit 38, displays a task icon 56 on the file management screen 50, and displays an arrow icon 58 for the task icon 56. Thus, the role of the file associated with the task is displayed on the file management screen 50. For example, the file management screen 50, to which the single icon 54 has been added, is transmitted to the information processing terminal 12. Thus, the file management screen 50 with the single icon 54 is displayed on the display 12F of the information processing terminal 12.

In contrast, in step 112, the CPU 14A displays multiple overlapping icons 54 on the file management screen 50, and proceeds to step 114. That is, the CPU 14A, which functions as the display unit 36 and the task-related-information display unit 38, displays the overlapping icons 54 on the file management screen 50 by displaying arrow icons 58 for task icons 56. Thus, the CPU 14A displays, on the file management screen 50, the roles of the files associated with the tasks. For example, the file management screen 50, to which the overlapping icons 54 have been added, is transmitted to the information processing terminal 12, and the file management screen 50 with the overlapping icons 54 is displayed on the display 12F of the information processing terminal 12.

In step 114, the CPU 14A determines whether at least one icon 54 has been selected. For example, the CPU 14A determines whether an operation such as a mouseover on at least one icon 54 has been performed. The CPU 14A waits until the determination result is positive, and proceeds to step 116.

In step 116, the CPU 14A determines whether the at least one icon 54, which has been selected, includes multiple icons 54. In the determination, the CPU 14A determines whether an operation such as a mouseover on a part, in which multiple overlapping task icons 56 are displayed, has been performed. If the determination result is positive, the CPU 14A proceeds to step 118. If the determination result is negative, the CPU 14A proceeds to step 122.

In step 118, the CPU 14A displays a task selection screen 64, and proceeds to step 120. That is, the CPU 14A, which functions as the task-related-information display unit 38, displays a task selection screen 64 as a pop-up screen as illustrated in Fig. 9. For example, a generated task selection screen 64 is transmitted to the information processing terminal 12. Thus, the task selection screen 64 is displayed as a pop-up screen on the display 12F of the information processing terminal 12.

In step 120, the CPU 14A determines whether a task has been selected on the task selection screen 64. The CPU 14A waits until the determination result is positive, and proceeds to step 122.

In step 122, the CPU 14A obtains the corresponding task information from the task management server 16, and proceeds to step 124. That is, the CPU 14A, which functions as the task-management-system coordination unit 34, obtains, from the task management system 20, task information corresponding to the selected task.

In step 124, the CPU 14A displays the task management screen 60 on the basis of the obtained task information, and ends the series of processes. That is, the CPU 14A, which functions as the task-related-information display unit 38, displays the task management screen 60 as a pop-up screen for the file management screen 50 as illustrated in Fig. 7. For example, the task management screen 60 that is to be displayed is generated, and the generated screen is transmitted to the information processing terminal 12. Thus, the task management screen 60 is displayed on the display 12F of the information processing terminal 12.

In the exemplary embodiment described above, the example in which a task management screen 60 is displayed as a pop-up screen for a file management screen 50 is described. When a file is selected on the task management screen 60, the file management screen 50 may be displayed in the same screen or as a pop-up screen.

In the embodiments above, the term "processor" refers to hardware in a broad sense. Examples of the processor include general processors (e.g., CPU) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The process performed by the units in the information processing system 10 according to the exemplary embodiment may be performed through software, through hardware, or through a combination of software and hardware. The process performed by the units in the information processing system 10 may be implemented as a program which is stored in a storage medium for distribution.

As a matter of course, the present disclosure is not limited to the exemplary embodiment described above. Other than the exemplary embodiment, various changes may be made without departing from the gist of the present disclosure.

## Claims

1. An information processing apparatus comprising:
a processor configured to:
obtain a role of a file associated with a task, the task being managed on a task management screen for managing the task; and
display the file on a file management screen for managing the file, the display being performed in a predetermined display format corresponding to the obtained role of the file.

2. The information processing apparatus according to Claim 1,
wherein the processer is configured to perform the display in a display format which indicates that the role is at least one of a reference file or an output file, the reference file being referred to in the task, the output file being output from the task.

3. The information processing apparatus according to Claim 2,
wherein the processer is configured to display the file in the display format in which an additional image is added to the file, the additional image representing the at least one of a reference file or an output file.

4. The information processing apparatus according to Claim 3,
wherein the processor is configured to, when the at least one of a reference file or an output file is related to a plurality of tasks, display additional images, the additional images being equal to the plurality of tasks in number.

5. The information processing apparatus according to Claim 3 or 4,
wherein the processor is configured to display the additional image in a display format different in each progress of the task.

6. The information processing apparatus according to any one of Claims 1 to 5,
wherein the processor is configured to display, on the file management screen, a file to be added for the task, in a display format indicating that the file is to be added.

7. The information processing apparatus according to any one of Claims 1 to 6,
wherein the processor is configured to, when there is at least one file which is automatically collected in display of the task management screen, display the at least one file on the file management screen in a display format different from a display format of another file.

8. The information processing apparatus according to Claim 7,
wherein the processor is configured to display a file among the at least one automatically-collected file on the file management screen in the display format identical to the display format of the other file, the displayed file among the at least one automatically-collected file being a file which is viewed on the task management screen.

9. The information processing apparatus according to Claim 7,
wherein the processor is configured to display a file among the at least one automatically-collected file on the file management screen, the displayed file among the at least one automatically-collected file being a file which is viewed on the task management screen.

10. The information processing apparatus according to any one of Claims 1 to 9,
wherein the processor is configured to, when there is a file associated with a plurality of tasks, display the file on the file management screen in accordance with an order corresponding to an execution order of the tasks.

11. An information processing system comprising:
the information processing apparatus according to any one of Claims 1 to 10; and
an information processing terminal that communicates with the information processing apparatus to display the file management screen through the displaying of the file.

12. A program causing a computer to execute a process for information processing, the process comprising:
obtaining a role of a file associated with a task, the task being managed on a task management screen for managing the task; and
displaying the file on a file management screen for managing the file, the display being performed in a predetermined display format corresponding to the obtained role of the file.

13. An information processing method comprising:
obtaining a role of a file associated with a task, the task being managed on a task management screen for managing the task; and
displaying the file on a file management screen for managing the file, the display being performed in a predetermined display format corresponding to the obtained role of the file.
